# FASCICULE DE BREVET EUROPEEN

(11) **EP 3 044 014 B1**
(45) Date de publication et mention de la délivrance du brevet: **27.03.2019**
(21) Numéro de dépôt: 14747380.5
(22) Date de dépôt: 05.08.2014
(51) Int. Cl.: B60C 11/03

(54) **PNEU À DESSIN DE SCULPTURE ASYMÉTRIQUE ÉVOLUTIF**
REIFEN MIT ENTFALTENDEM ASYMMETRISCHEM FORMDESIGN
TYRE WITH EVOLVING ASYMMETRICAL SCULPTED DESIGN

(30) Priorité: 11.09.2013 FR 1358717
(43) Date de publication de la demande: 20.07.2016
(73) Titulaire: Compagnie Générale des Etablissements Michelin, 63000 Clermont-Ferrand (FR)
(72) Inventeur: PALLOT, Patrick, F-63040 Clermont Ferrand Cedex 9 (FR); DELBOS, Mathieu, F-63040 Clermont-Ferrand Cedex 9 (FR); DAYET, Patrick, F-63040 Clermont-Ferrand Cedex 9 (FR); PINEAU, Jacky, F-63040 Clermont-Ferrand Cedex 9 (FR); MUHLHOFF, Olivier, F-63040 Clermont-Ferrand Cedex 9 (FR)
(74) Mandataire: Diernaz, Christian
(86) Numéro de dépôt international: PCT/EP2014/066764
(87) Numéro de publication internationale: WO 2015/036175

(56) Documents cités:
- EP-A1- 2 546 075
- WO-A1-2011/135000
- WO-A1-2012/069603

## Description

### DOMAINE DE L'INVENTION

La présente invention concerne le dessin de sculpture des bandes de roulement de pneu pour voiture et plus précisément les dessins de sculpture asymétriques.

### ÉTAT DE LA TECHNIQUE

Il est connu de pourvoir une bande de roulement d'un pneu destiné à équiper une voiture avec une pluralité de rainures d'orientation circonférentielle et transversales, ces rainures délimitant une pluralité d'éléments de relief formant une sculpture. La surface externe de ces éléments constitue une surface de roulement destinée à venir en contact avec une chaussée pendant le roulage. Les rainures et incisions forment un dessin de sculpture visible sur la surface de roulement à l'état neuf. Avec l'usure ce dessin peut se conserver ou se modifier.

Il est par ailleurs connu de réaliser des dessins de sculpture asymétriques c'est-à-dire qui sont différents de part et d'autre du plan médian de la bande de roulement, ce plan divisant ladite bande en deux moitiés de même largeur axiale. L'avantage des dessins de sculpture asymétriques est de permettre une différenciation des parties du pneu en fonction de leur position par rapport au côté destiné à être vers l'extérieur d'un véhicule quand le pneu est monté sur ce véhicule.

Un pneu monté sur un véhicule présente une empreinte de contact centrée sur la trace de son plan médian équatorial lorsque ce véhicule roule en ligne droite. Lors de manoeuvre de virage, il se produit un report de charge sur les pneus situés vers l'extérieur de la trajectoire suivie par le véhicule, tandis que les pneus situés à l'intérieur sont déchargés. Plus précisément, ce transfert de charge se fait sur la partie axialement à l'extérieur de ces pneus. Ce transfert de charge se traduit par une modification de la forme des empreintes de contact des pneus.

Le document de brevet WO-2007071284-A1 décrit un pneu dont la bande de roulement est pourvue d'un dessin de sculpture asymétrique, cette sculpture comprenant sur le côté intérieur deux rainures tandis que sur le côté extérieur une seule rainure. Ce dessin de sculpture est conservé toute la durée d'usage du pneu.

On a toutefois noté qu'avec l'usure il se produisait pour ce type de pneu de l'art antérieur une diminution de la performance d'adhérence sur sol mouillé.

Il est fait état des documents publiés WO2011/135000A1 et WO2012/069603 A1 en ce qu'ils peuvent être utiles à la compréhension de l'apport de la présente invention.

### Définitions :

Les conditions de référence du pneu sur sa jante de montage telles que définies par la norme européenne E.T.R.T.O. précisent la pression de gonflage correspondant à la capacité de charge maximale admissible du pneu (*"Load Index"* en anglais) indiquée par son indice de charge et son code vitesse. Toutefois, les conditions d'utilisation d'un pneu sur véhicule diffèrent des conditions de référence en ce que la charge portée est égale à environ 80% de la charge maximale admissible.

L'empreinte de contact du pneu avec la chaussée est obtenue avec le pneu à l'arrêt monté sur sa jante de montage et aux conditions d'utilisation. On note S la surface totale de contact dans ces conditions, cette surface étant égale à la surface totale délimitée par le contour externe de l'empreinte de contact du pneu sous ses conditions de référence ; cette surface inclut les parties en creux.

Le taux de creux surfacique d'une sculpture de bande de roulement est égal au rapport entre la surface des creux (essentiellement formés par des rainures) délimités par les éléments de relief (blocs, nervures) et la surface totale (surface de contact des éléments de relief et surface des creux). Un taux de creux surfacique faible indique une grande surface de contact de la bande de roulement et une faible surface de creux entre les éléments de relief.

De même, on définit un taux de creux surfacique pour une partie s'étendant circonférentiellement comme le rapport entre la surface de creux de cette partie et la surface totale de cette partie de bande, cette surface totale incluant la surface de matière et la surface des creux s'ouvrant sur la surface de ladite partie.

Le taux de creux volumique est égal au rapport entre le volume de tous les creux et le volume de la bande, ce dernier incluant à la fois le volume de matière et le volume de creux.

De même, on définit un taux de creux volumique pour une partie d'une bande de roulement comme le rapport entre le volume de creux de cette partie et le volume total de cette partie de bande, ce volume total incluant le volume de matière et le volume de creux de ladite partie.

Ces taux de creux surfacique et de creux volumique sont définis à l'état neuf d'une bande de roulement et à tout état d'usure intermédiaire de ladite bande.

Un bloc est un élément en relief formé sur une bande de roulement, cet élément étant délimité par des creux ou rainures et comprenant plus de deux parois latérales et une face de contact, cette dernière étant destinée à venir en contact avec la chaussée pendant le roulage.

Une nervure est un élément en relief formé sur une bande de roulement, cet élément étant délimité par deux rainures. Une nervure comprend deux parois latérales et une face de contact, cette dernière étant destinée à venir en contact avec la chaussée.

Par direction radiale, on entend une direction qui est perpendiculaire à l'axe de rotation du pneu (cette direction correspond à la direction de l'épaisseur de la bande de roulement).

Par direction axiale ou transversale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Une découpure désigne soit une rainure soit une incision et correspond à l'espace délimité par des parois de matière se faisant face et distantes l'une de l'autre d'une distance moyenne, cette distance moyenne pouvant être nulle. Ce qui différencie une incision d'une rainure c'est précisément cette distance ; dans le cas d'une incision, cette distance est appropriée pour permettre la mise en contact au moins partielle des parois opposées lors du passage dans le contact avec la chaussée. Cette distance, pour une incision destinée à un pneu de véhicule de tourisme, est en règle générale, sur le pneu à l'état neuf, au plus égale à 2 millimètres (2 mm). Dans le cas d'une rainure, les parois de cette rainure ne peuvent pas venir en contact l'une contre l'autre pendant le roulage aux conditions d'utilisation.

### BREF EXPOSE DE L'INVENTION

La présente invention vise à conserver les performances d'adhérence sur chaussée humide avec l'usure d'une bande de roulement comportant un dessin de sculpture asymétrique.

À cet effet, l'invention a pour objet un pneu de véhicule tourisme comportant une bande de roulement prolongée de part et d'autre par des flancs, cette bande de roulement ayant une surface de roulement destinée à venir en contact avec une route. Cette bande de roulement est pourvue d'un dessin de sculpture asymétrique par rapport à un plan médian divisant cette bande en deux parties de même largeur axiale (mesurée dans une direction parallèle à l'axe de rotation), une partie externe et une partie interne, cette partie externe étant située entre ce plan médian et le flanc destiné à être placé sur l'extérieur d'un véhicule et la partie interne étant située entre le même plan et le flanc destiné à être placé vers l'intérieur du même véhicule, la partie interne et la partie externe. Chaque partie comprend au moins un creux, c'est-à-dire une cavité formant à l'état neuf une rainure ouverte sur la surface de roulement ou une cavité sous-jacente à la surface de roulement à l'état neuf et destinée à former une rainure après une usure partielle de la bande. Ces creux définissent à l'état neuf et pour chaque partie (interne et externe) un volume total de creux, respectivement **Vi0** et **Ve0,** un taux de creux surfacique, respectivement **Ti0** et **Te0** ces taux étant différents de zéro, et de façon qu'à l'état neuf on ait un rapport **R0** entre le volume de creux de la partie interne et le volume de creux de la partie externe, et à chaque état d'usure (U) pris entre l'état initial et la limite d'usure de la bande on ait un rapport **RU** entre le volume de creux de la partie interne et le volume de creux de la partie externe. Ce pneu est caractérisé en ce que la bande de roulement comprend une pluralité de creux cachés formés sous la surface de roulement à l'état neuf. Ces creux cachés sont destinés à former de nouvelles rainures après une usure prédéterminée, ces creux étant positionnés majoritairement du côté intérieur de ladite bande. Ces derniers creux peuvent être orientés dans une direction transversale ou circonférentielle.

En outre le pneu est caractérisé en ce qu'après une usure partielle de la bande de roulement, le rapport **RU** devient supérieur au rapport **R0** et le demeure jusqu'à usure totale de la bande.

De façon plus préférentielle, le rapport **RU** est supérieur au rapport **R0** à partir d'une usure partielle correspondant à 60% de l'épaisseur totale de bande à user.

Par épaisseur totale de bande à user, on entend ici l'épaisseur maximale mesurée entre la surface de roulement à l'état neuf de la bande et les indicateurs de limite d'usure imposés par la législation. Ces indicateurs de limite d'usure ont une hauteur mesurée par rapport au fond des rainures de 1.6 mm en Europe. L'épaisseur totale à user s'obtient par différence entre la profondeur des rainures et hauteur des indicateurs de limite d'usure.

Avantageusement le rapport **R0** est supérieur à 1.

Avantageusement le pneu selon l'invention est tel que le taux de creux surfacique **Te0** de la partie externe à l'état neuf est supérieur au taux de creux surfacique **Ti0** de la partie interne.

De façon préférentielle le pneu est tel que le rapport **RU** est au moins égal à 1.1 fois le rapport **R0** et encore plus préférentiellement au moins égal à 1.2 fois le rapport **R0.**

Selon un mode de réalisation de l'invention le rapport **RU** augmente pour différents niveaux d'usure successifs.

Selon un autre mode de réalisation de l'invention le rapport **RU** augmente continûment en fonction de l'usure à partir d'une certaine profondeur.

Pour réaliser un pneu selon l'invention, il est possible de prévoir que le volume de creux de la partie externe est quasi nul voire nul à partir d'une usure supérieure ou égale à 75% l'épaisseur totale à user.

Avantageusement le pneu selon l'invention est tel que le taux de creux surfacique augmente avec l'usure de la bande sur la partie interne tandis qu'il diminue sur la partie externe.

Dans une variante de réalisation d'un pneu selon l'invention la bande de roulement comprend une pluralité de rainures d'orientation générale circonférentielle, au moins certaines des rainures circonférentielles formées sur la partie interne de la bande ayant un profil vu en coupe tel que la largeur de ces rainures sur la surface de roulement va en augmentant avec l'usure de la bande.

"Transversal" doit, ici, être interprété de façon large pour englober également toute direction oblique, c'est-à-dire faisant au maximum un angle de 60 degrés avec la direction de l'axe de rotation du pneu.

De façon préférentielle, le taux de creux surfacique **Te0** de la partie externe PE à l'état neuf est supérieur au taux de creux surfacique **Ti0** de la partie interne PI à l'état neuf.

D'autres caractéristiques et avantages de l'invention ressortent de la description faite ci-après en référence aux dessins annexés qui montrent, à titre d'exemples non limitatifs, des variantes de réalisation de l'objet de l'invention.

### BREVE DESCRIPTION DES FIGURES

La figure 1 montre une vue en plan d'une partie d'une bande de roulement selon l'invention ;
La figure 2 montre une coupe d'un bloc de la bande de roulement selon la figure 1 ;
La figure 3 montre une vue en plan d'une partie de la bande de roulement montrée à la figure 1 après une usure partielle ;
La figure 4 montre une vue en coupe d'une partie d'une bande de roulement selon une deuxième variante de l'invention ;
La figure 5 montre une vue en coupe d'une partie d'une bande de roulement selon une troisième variante de l'invention ;
La figure 6 montre la bande de roulement de la figure 5 après usure partielle supérieure à 50%.

### DESCRIPTION DES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

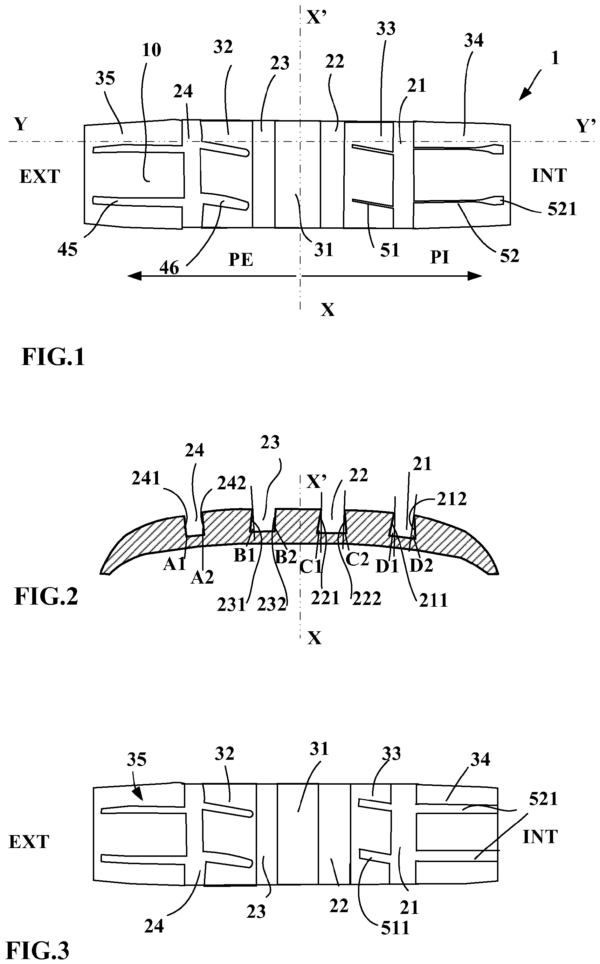

Les figures 1 à 3 montrent une première variante d'une bande de roulement selon l'invention.

Dans ce premier exemple de réalisation de l'invention, on montre une bande de roulement 1 d'un pneu pour véhicule de tourisme, cette bande de roulement comprenant radialement à l'extérieur une surface de roulement 10 destinée à venir en contact avec une chaussée en roulage. Cette bande de roulement 1 est pourvue d'une sculpture réalisée dans l'épaisseur de la bande, cette sculpture étant formée de creux (rainures, incisions, canaux).

Cette bande de roulement impose, par son dessin de sculpture, un sens préférentiel de montage repéré par exemple sur l'un de ses flancs par un marquage indiquant - par exemple - quel flanc du pneu doit être positionné vers l'extérieur du véhicule quand le pneu pourvu de cette bande est monté sur l'un des essieux d'un véhicule (sur les figures de la présente demande, le côté destiné à être placé à l'extérieur est repéré par les lettres "EXT", tandis que l'autre côté est repéré par les lettres "INT").

À l'état neuf représenté sur cette figure 1, on montre une partie de la surface de roulement 10 de la bande de roulement 1. L'axe XX' montre l'intersection du plan médian équatorial du pneu avec le plan de la figure ; cet axe XX' coupe la surface de roulement 10 en deux partie de largeur axiale (c'est-à-dire selon la direction de l'axe de roulement du pneu indiqué par l'axe YY') égale. On distingue une partie externe PE et une partie interne PI. Lorsque le pneu est monté sur un véhicule, la partie externe PE est positionnée de manière à être visible de l'extérieur du véhicule. C'est cette partie externe PE qui va être particulièrement sollicitée lors des manoeuvres de virage. L'autre partie intérieure PI est placée vers l'intérieur du véhicule. Cette dernière est moins sollicitée en virage puisque l'on sait qu'il y a un report d'une partie de la charge supportée vers la partie externe et que les efforts tangents exercés par la chaussée sont réduits sur la partie interne comparativement aux efforts tangents exercés par la même chaussée sur la partie externe.

La bande de roulement selon l'invention montrée avec la figure 1 comprend quatre rainures circonférentielles 21, 22, 23, 24 de même profondeur égale à 7.8 mm, ces rainures circonférentielles divisant cette bande en une nervure médiane 31 centrée sur le plan médian XX', deux nervures intermédiaires 32, 33 et axialement vers l'extérieur deux nervures d'épaulement 34, 35.

Sur la nervure d'épaulement 35 de la partie externe PE, il est formé en outre des rainures transversales 45 ayant une largeur de 4 mm et s'étendant sur une profondeur moyenne égale à 6.7 mm ; cette profondeur est décroissante en allant axialement vers le côté extérieur compte tenu du profil transversal de la surface de roulement sur la nervure d'épaulement. La nervure intermédiaire 32 de la partie externe PE est pourvue de rainures obliques 46 faisant un angle de 10 degrés avec la direction axiale YY'. Ces dernières rainures obliques 46 ne s'ouvrent que dans la rainure circonférentielle 24 formée entre la nervure d'épaulement 35 et la nervure intermédiaire 32. Ces rainures obliques 46 présentent les mêmes caractéristiques géométriques que les rainures transversales 45 formées sur la nervure d'épaulement 35. Les parois délimitant ces rainures transversales et obliques sont planes et non inclinées par rapport à une direction perpendiculaire à la surface de roulement 10. Ainsi les largeurs de ces rainures transversales 45 et obliques 46 sont conservées dans la profondeur.

Sur la figure 2 montrant la même bande de roulement en coupe dans un plan de coupe méridien contenant l'axe de rotation YY' du pneu, on distingue les profils des parois délimitant les rainures circonférentielles. Plus précisément, la rainure circonférentielle 24 la plus à l'extérieur axialement de la partie externe PE de la bande est délimitée par des parois 241, 242 dont les intersections avec ce plan de coupe sont rectilignes et font, respectivement, avec une direction perpendiculaire à l'axe de rotation des angles A1 et A2 nuls.

L'autre rainure circonférentielle 23 de la partie externe de la bande comprend une première paroi 231 formant un angle B1 négatif et égal à 5 degrés avec une direction perpendiculaire à la surface de roulement et une paroi 232 faisant, avec une même direction, un angle B2 nul. Par angle négatif d'une paroi il faut comprendre que ladite paroi est en contre dépouille c'est-à-dire qu'elle tend à élargir la rainure. La paroi 232 d'angle nul de cette rainure 23 est située du côté du plan médian XX' tandis que l'autre paroi 231 est située axialement vers l'extérieur par rapport à la paroi 232. De cette manière, la largeur de la rainure circonférentielle 23 située entre la nervure médiane 31 et la nervure intermédiaire 32 de la partie externe PE de la bande de roulement est égale à 11.5 mm à l'état neuf et égale à 12.2 mm après une usure totale correspondant à la profondeur maximale des rainures (soit 7,8 mm de profondeur).

En ce qui concerne la rainure circonférentielle 24 axialement la plus à l'extérieur de la partie externe PE, la largeur égale, à l'état neuf, à 9 mm, est conservée sur toute la profondeur de cette rainure.

Sur la partie interne PI, les rainures circonférentielles 21, 22 se distinguent des rainures circonférentielles 23, 24 sur la partie externe PE en ce qu'elles ont des profils transversaux vus en coupe sur la figure 2 qui vont en s'élargissant progressivement dans la profondeur de la bande. Ainsi, la rainure circonférentielle 22 la plus proche du plan médian XX' a une largeur à l'état neuf égale à 11.5 mm tandis qu'à pleine profondeur (7.8 mm) cette largeur est égale à 13,7 mm. Pour ce faire, les parois 221, 222 délimitant cette rainure 22 forment des angles négatifs C1 et C2 respectivement égaux à 10 degrés et 5 degrés, la paroi formant le plus grand angle en valeur absolue étant située près du plan médian.

Par ailleurs, la rainure circonférentielle axialement à l'extérieur de la partie interne a une largeur à l'état neuf égale à 10 mm et égale à 12.9 mm à une profondeur égale à 7.8 mm correspondant à la profondeur maximale de ladite rainure circonférentielle. Cette rainure circonférentielle 21 est délimitée par une paroi 211 formant un angle négatif D1 égal à 15 degrés avec une direction perpendiculaire à l'axe de rotation et une autre paroi 212 formant un angle négatif D2 égal à 10 degrés avec la même direction, l'angle le plus petit étant formé par la paroi 212 appartenant à la nervure d'épaulement 34 de la partie interne PI.

En outre, il est formé une pluralité d'incisions 51 sur la nervure intermédiaire 33 et une pluralité d'incisions 52 sur la nervure d'épaulement 34, ces incisions étant prolongées dans l'épaisseur de la bande par un élargissement 511, 521 respectivement. Ces élargissements sont destinés à former après une usure partielle de la bande de nouvelles rainures transversales 511, 521 visibles sur la figure 3. L'élargissement 511 prolongeant l'incision 51 de la nervure intermédiaire 33 a, vue en coupe, une forme dont la largeur est égale à 4 mm. L'élargissement 521 prolongeant l'incision 52 de la nervure d'épaulement 34 a, vue en coupe, une forme dont la largeur est égale à 4 mm. Comme on le voit sur la figure 3, les incisions de la nervure intermédiaire ne s'ouvrent que sur une rainure circonférentielles tandis que les incisions de la nervure d'épaulement s'ouvrent de chaque côté de ladite nervure.

Le dessin de sculpture de la bande de roulement décrit avec les figures 1 et 2 est asymétrique par rapport au plan médian XX' en ce qu'il présente de part et d'autre de ce plan médian deux dessins en surface distincts. Ces dessins sont constitués par les arêtes formées par les creux (rainures et incisions). On conserve une asymétrie quel que soit le niveau d'usure partielle.

On définit à l'état neuf un taux de creux surfacique Tso pour l'ensemble de ce dessin de sculpture de bande de roulement comme étant égal au rapport entre la surface des creux formés par les rainures et la surface totale (c'est-à-dire la surface possible de contact des éléments de relief et surface des creux). Dans le cas présent le taux de creux surfacique à l'état neuf est égal à **31.2** %.

De même, on définit un taux de creux surfacique **Tseo** pour la partie externe PE comme le rapport entre la surface de creux de cette partie et la surface totale de cette partie de bande, cette surface totale incluant la surface de matière et la surface des creux s'ouvrant sur la surface de ladite partie. Dans le cas présent ce taux de creux surfacique de la partie externe **Tseo** est égal à **35** % à l'état neuf. Pour la partie interne, le taux de creux surfacique **Tsio** est égal à **27,4** % à l'état neuf.

Le volume total de creux **Veo** de la partie externe PE comprend le volume des rainures circonférentielles et celui des rainures transversales et obliques ; il est dans le cas présent égal à **417750** mm³. Pour la partie interne le volume de creux **Vio** est égal à **428153** mm³. Ceci conduit à un taux de creux volumique **Tveo** pour la partie externe de **35.74** % et pour la partie interne un taux de creux volumique **Tvio** de **36.63** % à l'état neuf.

Ces taux de creux surfacique et ces taux de creux volumique globaux ou dans chaque partie interne ou externe et les volumes de creux sont aussi définis pour chaque état d'usure intermédiaire de la bande.

Dans le cas présenté ici, après une usure égale à 64% de la profondeur des rainures circonférentielles (correspondant à une usure égale à 80% de l'épaisseur totale de bande à user), on a les valeurs suivantes :
Volume de creux de la partie externe PE : **Ve** = 158009 mm³
Volume de creux de la partie interne PI **Vi** = 184537 mm³
Taux de creux surfacique de la partie externe PE : **Tse** = 35,5%
Taux de creux surfacique de la partie interne PI : **Tsi** = 40,7%
Taux de creux volumique de la partie externe PE : **Tve** = 35,53%
Taux de creux volumique de la partie interne PI : **Tvi** = 41,50%

Le rapport **RO** entre le volume total de creux de la partie interne PI et le volume total de creux de la partie externe PE à l'état neuf est égal à 1.025 (**Vio/Veo**).

Ce rapport après usure partielle de 64% de l'épaisseur de la bande est noté **RU** et est, dans le cas présent, égal à 1.168 (**Vi/Ve**).

Le rapport **RU/RO** pour une usure partielle égale à 64% de la profondeur totale des rainures est ici égal à 1.14.

Ainsi après usure partielle de la bande de roulement, la répartition des creux entre la partie interne PI et la partie externe PE a évolué pour augmenter sensiblement la part de creux de la partie interne relativement à la part de creux de la partie externe.

La figure 3 montre une vue partielle de la surface de la bande après cette usure partielle. On distingue de nouvelles rainures transversales 511 et 521 sur la partie interne de la bande. Par ailleurs les largeurs des rainures circonférentielles mesurées sur la nouvelle surface de roulement de la bande sont réduites pour les rainures de la partie externe tandis qu'elles sont élargies pour les rainures de la partie interne (ces réductions et élargissements étant pris par rapport aux largeurs sur la surface de roulement à l'état neuf).

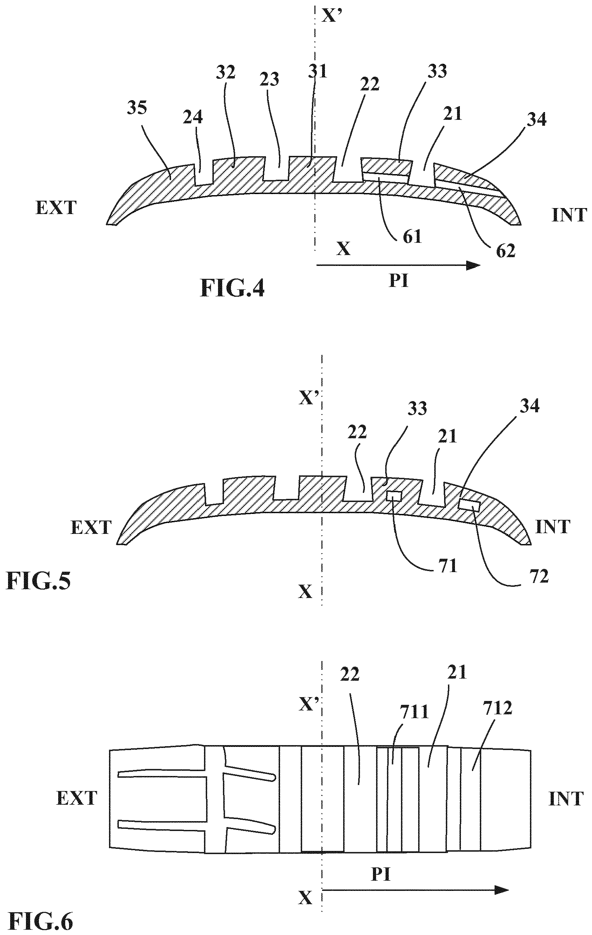

La figure 4 montre en coupe méridienne (dans un plan contenant l'axe de rotation du pneu) une bande de roulement 1 selon une autre variante de l'invention.

Selon cette deuxième variante, la bande de roulement 1 comprend sur sa partie externe PE deux rainures circonférentielles 23, 24 et une pluralité de rainures transversales ou obliques dans une configuration semblable à celle décrite avec le support des figures 1 à 3 pour la première variante. Sur sa partie interne PI, la bande comprend à l'identique de la première variante deux rainures circonférentielles 21, 22 ayant les mêmes profils vus en coupe que pour la première variante.

En outre, il est formé sur cette partie interne PI une pluralité de canaux 61, 62 sous la surface de roulement à l'état neuf dans la nervure intermédiaire 33 et la nervure épaule 34. Ces canaux 61, 62 s'ouvrent à l'extérieur de la bande de roulement et dans chacune des rainures circonférentielles de la partie interne. Ces canaux sont appropriés pour former de nouvelles rainures transversales après une usure de l'ordre de 60% de l'épaisseur totale à user de la bande. Ces canaux 61, 62 peuvent être remplis d'une matière facilitant la fabrication et pouvant s'éliminer naturellement après que l'usure de la bande atteigne lesdits canaux. On peut également utiliser des moules comportant des doigts moulant ces canaux transversaux ou obliques sous la surface de roulement à l'état neuf.

Après une usure supérieure à la moitié de l'épaisseur de bande neuve, l'apparition de nouvelles rainures permet en outre d'augmenter le taux de creux surfacique sur la partie interne PI ainsi que le nombre d'arêtes et la longueur totale desdites arêtes. Cette augmentation de longueur totale d'arêtes sur la partie interne PI combinée à une augmentation du rapport **RU** relativement au rapport **RO** évalué à l'état neuf améliore davantage encore la performance sur sol mouillé après usure tout en améliorant la tenue de route en virage sur chaussée sèche.

Dans une troisième variante montrée en coupe avec la figure 5 et en plan avec la figure 6, en lieu et place des canaux transversaux sous-jacents à la surface de roulement à l'état neuf de la deuxième variante, il est formé dans chacune des deux nervures 33, 34 axialement externes de la partie interne PI de la bande 1 un canal 71, 72 respectivement. Ces canaux 71, 72 sont orientés circonférentiellement et formés radialement sous la surface de roulement à l'état neuf. Chacun de ces canaux 71, 72 est destiné à former, après une usure partielle de la bande de roulement, une nouvelle rainure circonférentielle 711, 712 comme cela est visible sur la vue en plan de la figure 6.

Cette solution permet d'atteindre une meilleure efficacité pour un pneu de type sport en amplifiant avec l'usure la part relative de volume de creux sur la partie interne PI comparativement à la part de volume de creux de la partie externe PE d'un pneu. En outre, la formation d'arêtes additionnelles lors de la création de nouvelles rainures circonférentielles après usure partielle permet d'améliorer la performance en sollicitation transversale (sur sols mouillés).

L'invention ayant été décrite de manière générale à l'aide de trois exemples, il doit être compris que cette invention n'est pas limitée à ces variantes et que notamment toute combinaison desdites variantes fait partie de l'invention. Des rainures telles que décrites dans la publication de brevet WO 2011/039194 peuvent être mises en oeuvre que ce soit sur la partie interne ou sur la partie externe ou encore sur les deux parties.

## Revendications

1. Pneu de véhicule tourisme comportant une bande de roulement (1) prolongée de part et d'autre par des flancs, cette bande de roulement (1) ayant une surface de roulement (10) destinée à venir en contact avec une route, cette bande de roulement (1) étant pourvue d'un dessin de sculpture asymétrique par rapport à un plan médian XX' divisant cette bande en deux parties de même largeur axiale, cette largeur axiale étant mesurée dans une direction parallèle à l'axe de rotation, une partie externe PE et une partie interne PI, cette partie externe PE étant située entre ce plan médian XX' et le flanc destiné à être placé sur l'extérieur d'un véhicule et la partie interne PI étant située entre le même plan et le flanc destiné à être placé vers l'intérieur du même véhicule, la partie interne et la partie externe comprenant chacune au moins un creux (21, 22, 23, 24) formant une rainure ou destiné à former une rainure à partir d'une usure partielle de la bande, ces creux définissant à l'état neuf et pour chaque partie interne et externe un volume total de creux, respectivement **Vi0** et **Ve0,** un taux de creux surfacique, respectivement **Ti0** et **Te0,** ces taux étant différents de zéro et de façon qu'à l'état neuf on ait un rapport **R0** entre le volume de creux de la partie interne et le volume de creux de la partie externe, et à chaque état d'usure (U) choisi entre l'état initial et la limite d'usure de la bande on ait un rapport **RU** entre le volume de creux de la partie interne et le volume de creux de la partie externe, la bande de roulement comprenant une pluralité de creux cachés (511, 521, 71) destinés à former de nouvelles rainures après une usure prédéterminée, ce pneu étant **caractérisé en ce que** les creux cachés (511, 521, 71) sont positionnés majoritairement dans la partie interne PI de ladite bande et **en ce qu'**après une usure partielle de la bande de roulement, le rapport **RU** devient supérieur au rapport **R0** et le demeure jusqu'à usure totale de la bande.

2. Pneu selon la revendication 1 **caractérisé en ce que** l'usure partielle à partir de laquelle le rapport **RU** devient supérieur au rapport **R0** est égale à au moins 60% de l'épaisseur de bande de roulement (1) à user.

3. Pneu selon la revendication 1 ou la revendication 2 **caractérisé en ce que** rapport **R0** est supérieur à 1.

4. Pneu selon l'une des revendications 1 à 3 **caractérisé en ce que** le rapport **RU** est au moins égal à 1.1 fois le rapport **R0.**

5. Pneu selon la revendication 4 **caractérisé en ce que** le rapport **RU** est au moins égal à 1.2 fois le rapport **R0.**

6. Pneu selon l'une des revendications 1 à 5 **caractérisé en ce que** le rapport **RU** augmente pour différents niveaux d'usure.

7. Pneu selon la revendication 6 **caractérisé en ce que** le rapport **RU** augmente continûment en fonction de l'usure de la bande de roulement.

8. Pneu selon l'une des revendications 1 à 7 **caractérisé en ce que** le volume de creux de la partie externe est quasi nul voire nul à partir d'une usure supérieure ou égale à 75% l'épaisseur totale à user.

9. Pneu selon l'une des revendications 1 à 8 **caractérisé en ce que** le taux de creux en surface augmente avec l'usure de la bande sur la partie interne PI de la bande tandis qu'il diminue sur la partie externe PE de la bande.

10. Pneu selon l'une des revendications 1 à 9 **caractérisé en ce que** la bande de roulement comprend une pluralité de rainures (21, 22, 23, 24) d'orientation générale circonférentielle, au moins certaines de ces rainures circonférentielles formées sur la partie interne de la bande ayant un profil en coupe tel que la largeur de ces rainures sur la surface de roulement (10) va en augmentant avec l'usure de la bande.

11. Pneu selon la revendication 1 **caractérisé en ce que** les creux cachés (511, 521) sont orientés dans une direction transversale.

12. Pneu selon l'une des revendications 1 à 11 **caractérisé en ce que**, à l'état neuf, le taux de creux surfacique **Te0** de la partie externe PE est supérieur au taux de creux surfacique **Ti0** de la partie interne PI.

## Patentansprüche

1. Reifen eines Personenkraftwagens, umfassend eine Lauffläche (1), die auf beiden Seiten durch Flanken verlängert ist, wobei die Lauffläche (1) eine Laufoberfläche (10) aufweist, die dazu bestimmt ist, in Berührung mit einer Straße zu kommen, wobei die Lauffläche (1) über ein relativ zu einer Mittelebene XX', die die Fläche in zwei Teile mit der gleichen axialen Breite teilt, asymmetrisches Formdesign verfügt, wobei die axiale Breite in einer Richtung gemessen wird, die parallel zur Drehachse ist, einen äußeren Teil PE und einen inneren Teil PI, wobei sich der äußere Teil PE zwischen der Mittelebene XX' und der Flanke, die dazu bestimmt ist, auf der Außenseite eines Fahrzeugs platziert zu werden, befindet und sich der innere Teil PI zwischen der gleichen Ebene und der Flanke, die dazu bestimmt ist, in Richtung der Innenseite des gleichen Fahrzeugs platziert zu werden, befindet, wobei der innere Teil und der äußere Teil jeweils mindestens eine Vertiefung (21, 22, 23, 24) beinhalten, die eine Rille bildet oder dazu bestimmt ist, ab einer teilweisen Abnutzung der Fläche eine Rille zu bilden, wobei diese Vertiefungen im Neuzustand und für jeden inneren und äußeren Teil ein Gesamtvertiefungsvolumen, **Vi0** bzw. **Ve0,** und einen Oberflächenvertiefungsanteil, **Ti0** bzw. **Te0,** definieren, wobei diese Anteile ungleich null sind und dies derart erfolgt, dass im Neuzustand ein Verhältnis **R0** zwischen dem Vertiefungsvolumen des inneren Teils und dem Vertiefungsvolumen des äußeren Teils vorliegt und dass in jedem Abnutzungszustand (U), der zwischen dem Anfangszustand und der Abnutzungsgrenze der Fläche ausgewählt wird, ein Verhältnis **RU** zwischen dem Vertiefungsvolumen des inneren Teils und dem Vertiefungsvolumen des äußeren Teils vorliegt, wobei die Lauffläche eine Vielzahl von verborgenen Vertiefungen (511, 521, 71) beinhaltet, die dazu bestimmt sind, nach einer vorab festgelegten Abnutzung neue Rillen zu bilden, wobei der Reifen **dadurch gekennzeichnet ist, dass** die verborgenen Vertiefungen (511, 521, 71) hauptsächlich im inneren Teil PI der Fläche positioniert sind und dass nach einer teilweisen Abnutzung der Lauffläche das Verhältnis **RU** größer als das Verhältnis **R0** wird und dies bis zur kompletten Abnutzung der Fläche bleibt.

2. Reifen nach Anspruch 1, **dadurch gekennzeichnet, dass** die teilweise Abnutzung, ab der das Verhältnis **RU** größer als das Verhältnis **R0** wird, gleich mindestens 60 % der Dicke der abzunutzenden Lauffläche (1) ist.

3. Reifen nach Anspruch 1 oder nach Anspruch 2, **dadurch gekennzeichnet, dass** das Verhältnis **R0** größer als 1 ist.

4. Reifen nach einem der Ansprüche 1 bis 3, **dadurch gekennzeichnet, dass** das Verhältnis **RU** mindestens gleich dem 1,1-Fachen des Verhältnisses **R0** ist.

5. Reifen nach Anspruch 4, **dadurch gekennzeichnet, dass** das Verhältnis **RU** mindestens gleich dem 1.2-Fachen des Verhältnisses **R0** ist.

6. Reifen nach einem der Ansprüche 1 bis 5, **dadurch gekennzeichnet, dass** sich das Verhältnis **RU** bei unterschiedlichen Abnutzungsgraden erhöht.

7. Reifen nach Anspruch 6, **dadurch gekennzeichnet, dass** sich das Verhältnis **RU** entsprechend der Abnutzung der Lauffläche durchgehend erhöht.

8. Reifen nach einem der Ansprüche 1 bis 7, **dadurch gekennzeichnet, dass** das Vertiefungsvolumen des äußeren Teils ab einer Abnutzung größer oder gleich 75 % der gesamten abzunutzenden Dicke quasi null oder null ist.

9. Reifen nach einem der Ansprüche 1 bis 8, **dadurch gekennzeichnet, dass** der Vertiefungsanteil der Oberfläche sich mit der Abnutzung der Fläche auf dem inneren Teil PI der Fläche erhöht, wohingegen er sich auf dem äußeren Teil PE der Fläche verkleinert.

10. Reifen nach einem der Ansprüche 1 bis 9, **dadurch gekennzeichnet, dass** die Lauffläche eine Vielzahl von Rillen (21, 22, 23, 24) allgemein in Umfangsausrichtung beinhaltet, wobei zumindest einige der auf dem inneren Teil der Fläche gebildeten Umfangsrillen ein Querschnittsprofil aufweisen, sodass sich die Breite der Rillen auf der Laufoberfläche (10) mit Abnutzung der Fläche erhöht.

11. Reifen nach Anspruch 1, **dadurch gekennzeichnet, dass** die verborgenen Vertiefungen (511, 521) in einer Querrichtung ausgerichtet sind.

12. Reifen nach einem der Ansprüche 1 bis 11, **dadurch gekennzeichnet, dass** im Neuzustand der Oberflächenvertiefungsanteil **Te0** des äußeren Teils PE größer als der Oberflächenvertiefungsanteil **Ti0** des inneren Teils PI ist.

## Claims

1. Passenger vehicle tyre comprising a tread (1) extended on either side by sidewalls, this tread (1) having a tread surface (10) intended to come into contact with a road, this tread (1) being provided with an asymmetric tread pattern with respect to a median plane XX' that divides this tread into two parts with the same axial width, this axial width being measured in a direction parallel to the axis of rotation, an external part PE and an internal part PI, this external part PE being situated between this median plane XX' and the sidewall intended to be positioned on the outside of a vehicle, and the internal part PI being situated between the same plane and the sidewall intended to be positioned towards the inside of the same vehicle, the internal part and the external part each comprising at least one void (21, 22, 23, 24) that forms a groove or is intended to form a groove when the tread has partially worn away, these voids defining, in the new state and for each of the internal and external parts, a total voids volume **Vi0** and **Ve0,** respectively, and a voids surface ratio **Ti0** and **Te0,** respectively, these ratios being other than zero and such that, in the new state, there is a ratio **R0** between the voids volume of the internal part and the voids volume of the external part, and for each degree of wear (U) chosen between the initial state and the wear limit of the tread there is a ratio **RU** between the voids volume of the internal part and the voids volume of the external part, the tread comprising a plurality of hidden voids (511, 521, 71) that are intended to form new grooves after a predetermined amount of wear, this tyre being **characterized in that** most of these hidden voids (511, 521, 71) are positioned in the internal part PI of said tread, and **in that** when the tread has partially worn away, the ratio **RU** becomes greater than the ratio **R0** and remains so until the tread is completely worn.

2. Tyre according to Claim 1, **characterized in that** the partial wear from which the ratio **RU** becomes greater than the ratio **R0** is equal to at least 60% of the thickness of the tread (1) to be worn away.

3. Tyre according to Claim 1 or Claim 2, **characterized in that** the ratio **R0** is greater than 1.

4. Tyre according to one of Claims 1 to 3, **characterized in that** the ratio **RU** is equal to at least 1.1 times the ratio **R0**.

5. Tyre according to Claim 4, **characterized in that** the ratio **RU** is equal to at least 1.2 times the ratio **R0.**

6. Tyre according to one of Claims 1 to 5, **characterized in that** the ratio **RU** increases for different levels of wear.

7. Tyre according to Claim 6, **characterized in that** the ratio **RU** increases continuously as a function of the tread wear.

8. Tyre according to one of Claims 1 to 7, **characterized in that** the voids volume of the external part is virtually zero, or zero, starting from a degree of wear greater than or equal to 75% of the total thickness to be worn away.

9. Tyre according to one of Claims 1 to 8, **characterized in that** the voids surface ratio increases with the degree of tread wear on the internal part PI of the tread, whereas it decreases on the external part PE of the tread.

10. Tyre according to one of Claims 1 to 9, **characterized in that** the tread comprises a plurality of grooves (21, 22, 23, 24) with a circumferential overall orientation, at least some of the circumferential grooves formed on the internal part of the tread having a profile in cross section such that the width of these grooves over the tread surface (10) increases with the degree of tread wear.

11. Tyre according to Claim 1, **characterized in that** the hidden voids (511, 521) are oriented in a transverse direction.

12. Tyre according to one of Claims 1 to 11, **characterized in that**, in the new state, the voids surface ratio **Te0** of the external part PE is greater than the voids surface ratio **Ti0** of the internal part PI.
